(19) Europäisches Patentamt
European Patent Office
Office européen des brevets

(11) **EP 4 311 120 A1**

(12) **EUROPEAN PATENT APPLICATION**
published in accordance with Art. 153(4) EPC

(43) Date of publication:
**24.01.2024 Bulletin 2024/04**

(21) Application number: **22770325.3**

(22) Date of filing: **07.03.2022**

(51) International Patent Classification (IPC):
**H04B 7/0456** $^{(2017.01)}$

(52) Cooperative Patent Classification (CPC):
**H04B 7/0417; H04B 7/0456; H04B 7/06**

(86) International application number:
**PCT/CN2022/079451**

(87) International publication number:
**WO 2022/193970 (22.09.2022 Gazette 2022/38)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **19.03.2021 CN 202110298337**

(71) Applicant: **Beijing Unisoc Communications
Technology Co., Ltd.
Beijing 100083 (CN)**

(72) Inventor: **MA, Dawei
Shanghai 201203 (CN)**

(74) Representative: **Nordmeyer, Philipp Werner
df-mp Dörries Frank-Molnia & Pohlman
Patentanwälte Rechtsanwälte PartG mbB
Theatinerstraße 16
80333 München (DE)**

(54) **FEEDBACK METHOD AND APPARATUS FOR TYPE II PORT SELECTION CODEBOOK, DETERMINATION METHOD AND APPARATUS FOR TYPE II PORT SELECTION CODEBOOK, AND COMPUTER-READABLE STORAGE MEDIUM**

(57)    A feedback method and apparatus for a type II port selection codebook, a determination method and apparatus for a type II port selection codebook, and a computer-readable storage medium. The feedback method comprises: acquiring a reference signal to be measured, and determining a type II port selection codebook according to a measurement result of the reference signal to be measured; generating feedback parameters according to the determined type II port selection codebook, wherein the feedback parameters comprise the strongest coefficient index in a weighting coefficient matrix, amplitudes of all the coefficients and phases of at least some coefficients in the type II port selection codebook; and sending the feedback parameters. By means of the solution of the present invention, codebook feedback overheads can be reduced.

**FIG. 1**

**Description**

CROSS-REFERENCE TO RELATED APPLICATIONS

This application claims priority to Chinese Patent Application No. 202110298337.5, filed on March 19, 2021, and entitled "METHOD AND APPARATUS FOR FEEDING BACK TYPE II PORT SELECTION CODEBOOK, METHOD AND APPARATUS FOR DETERMINING TYPE II PORT SELECTION CODEBOOK, AND COMPUTER-READABLE STORAGE MEDIUM", the entire disclosure of which is incorporated herein by reference.

TECHNICAL FIELD

The present disclosure generally relates to communication technology field, and more particularly, to a method and apparatus for feeding back a type II port selection codebook, a method and apparatus for determining a type II port selection codebook, and a computer-readable storage medium.

BACKGROUND

In New Radio (NR) Release 17 (Rel-17, i.e., R17), during calculation of a new type II port selection codebook (also referred to as Type II codebook for short), a base station (gNB) can determine candidate spatial domain beams and candidate frequency domain beams in advance by using reciprocity of an angle and a delay between uplink and downlink channels, which causes the base station to configure for a User Equipment (UE) relatively strong equivalent channel coefficients of a combination of the spatial domain (port) and frequency domain beams used for measurement and report.

Therefore, in the type II port selection codebook that UE needs to feed back, a proportion of non-zero coefficients among coefficients in a weighting coefficient matrix W' is relatively large. If a feedback mode of the weighting coefficient matrix W' in the type II port selection codebook specified in Rel-16 is still used, it is necessary to indicate a strongest coefficient position, a non-zero coefficient position, and magnitude and phase of each non-zero coefficient of the weighting coefficient matrix W' (specifically, a strongest coefficient position in non-zero coefficients of the matrix, or a strongest coefficient position in a column of coefficients with a frequency domain beam index of zero), thus, feedback overhead of the codebook is relatively high.

SUMMARY

Embodiments of the present disclosure may reduce feedback overhead of a codebook.

In an embodiment of the present disclosure, a method for feeding back a type II port selection codebook is provided, including: acquiring a to-be-measured reference signal, and determining the type II port selection codebook based on a measurement result of the to-be-measured reference signal; generating feedback parameters based on the type II port selection codebook, wherein the feedback parameters include a strongest coefficient index, amplitudes of all coefficients, and phases of at least a portion of coefficients in a weighting coefficient matrix in the type II port selection codebook; and transmitting the feedback parameters.

Optionally, the phases of at least a portion of the coefficients refer to phases of non-zero coefficients in the weighting coefficient matrix, or phases of all the coefficients in the weighting coefficient matrix.

Optionally, based on that the phases of at least a portion of the coefficients refer to phases of non-zero coefficients in the weighting coefficient matrix, for any coefficient in the weighting coefficient matrix, whether the coefficient is a non-zero coefficient is determined based on a quantized value of an amplitude of the coefficient.

Optionally, the strongest coefficient index is selected from all the coefficients in the weighting coefficient matrix, or from all the non-zero coefficients in the weighting coefficient matrix.

Optionally, the feedback parameters further include each selected port in a port selection matrix in the type II port selection codebook.

Optionally, the feedback parameters further include each selected frequency domain beam in a frequency domain beam matrix in the type II port selection codebook.

In an embodiment of the present disclosure, an apparatus for feeding back a type II port selection codebook is provided, including: an acquiring circuitry configured to acquire a to-be-measured reference signal, and determine the type II port selection codebook based on a measurement result of the to-be-measured reference signal; a generating circuitry configured to generate feedback parameters based on the type II port selection codebook, wherein the feedback parameters include a strongest coefficient index, amplitudes of all coefficients, and phases of at least a portion of coefficients in a weighting coefficient matrix in the type II port selection codebook; and a transmitting circuitry configured to transmit the feedback parameters.

In an embodiment of the present disclosure, a method for determining a type II port selection codebook is provided, including: receiving feedback parameters, wherein the feedback parameters include a strongest coefficient index, amplitudes of all coefficients, and phases of at least a portion of coefficients in a weighting coefficient matrix in the type II port selection codebook; and determining the type II port selection codebook selected by a transmitter of the feedback parameters based on the feedback parameters.

Optionally, prior to said receiving the feedback parameters, the method further includes: configuring a to-be-measured reference signal, and indicating to feed back the type II port selection codebook.

Optionally, the phases of at least a portion of the coefficients refer to phases of non-zero coefficients in the weighting coefficient matrix, or phases of all the coefficients in the weighting coefficient matrix.

Optionally, based on that the phases of at least a portion of the coefficients refer to phases of non-zero coefficients in the weighting coefficient matrix, said determining the type II port selection codebook selected by the transmitter of the feedback parameters based on the feedback parameters includes: for any coefficient in the weighting coefficient matrix, determining whether the coefficient is a non-zero coefficient based on a quantized value of an amplitude of the coefficient.

Optionally, the strongest coefficient index is selected from all the coefficients in the weighting coefficient matrix, or from all the non-zero coefficients in the weighting coefficient matrix.

Optionally, the feedback parameters further include each selected port in a port selection matrix in the type II port selection codebook.

Optionally, the feedback parameters further include each selected frequency domain beam in a frequency domain beam matrix in the type II port selection codebook.

In an embodiment of the present disclosure, an apparatus for determining a type II port selection codebook is provided, including: a receiving circuitry configured to receive feedback parameters, wherein the feedback parameters include a strongest coefficient index, amplitudes of all coefficients, and phases of at least a portion of coefficients in a weighting coefficient matrix in the type II port selection codebook; and a determining circuitry configured to determine the type II port selection codebook selected by a transmitter of the feedback parameters based on the feedback parameters.

In an embodiment of the present disclosure, a non-volatile or non-transitory computer-readable storage medium having computer instructions stored therein is provided, wherein when the computer instructions are executed by a processor, the above method is performed.

In an embodiment of the present disclosure, an apparatus for feeding back a type II port selection codebook which includes a memory and a processor is provided, wherein the memory has computer instructions stored therein, and when the processor executes the computer instructions, the above method is performed.

In an embodiment of the present disclosure, an apparatus for determining a Type II port selection codebook which includes a memory and a processor is provided, wherein the memory has computer instructions stored therein, and when the processor executes the computer instructions, the above method is performed.

Embodiments of the present disclosure may provide following advantages.

For a UE side, the embodiments of the present disclosure provide a method for feeding back a type II port selection codebook, including: acquiring a to-be-measured reference signal, and determining the type II port selection codebook based on a measurement result of the to-be-measured reference signal; generating feedback parameters based on the type II port selection codebook, wherein the feedback parameters include a strongest coefficient index, amplitudes of all coefficients, and phases of at least a portion of coefficients in a weighting coefficient matrix in the type II port selection codebook; and transmitting the feedback parameters.

In exiting techniques, a position of each non-zero coefficient in a weighting coefficient matrix needs to be fed back when a type II port selection codebook is fed back, which seriously increases codebook feedback overhead of UE in Rel-17. In the embodiments of the present disclosure, amplitudes of all coefficients in the weighting coefficient matrix are fed back, so that the type II port selection codebook may be accurately indicated without additionally feeding back a position of each non-zero coefficient. Therefore, a new feedback parameter is designed for the type II port selection codebook, especially the feedback parameter for the weighting coefficient matrix W', so as to reduce codebook overhead.

For a network side, the embodiments of the present disclosure further provides an apparatus for feeding back a type II port selection codebook, including: an acquiring circuitry configured to acquire a to-be-measured reference signal, and determine the type II port selection codebook based on a measurement result of the to-be-measured reference signal; a generating circuitry configured to generate feedback parameters based on the type II port selection codebook, wherein the feedback parameters include a strongest coefficient index, amplitudes of all coefficients, and phases of at least a portion of coefficients in a weighting coefficient matrix in the type II port selection codebook; and a transmitting circuitry configured to transmit the feedback parameters. Therefore, the base station deduces positions of the non-zero coefficients in the weighting coefficient matrix based on the amplitudes of all the coefficients in received feedback information, without specifically receiving indication of a position of each non-zero coefficient.

BRIEF DESCRIPTION OF THE DRAWINGS

FIG. 1 is a flow chart of a method for feeding back a type II port selection codebook according to an embodiment;

FIG. 2 is a structural diagram of an apparatus for feeding back a type II port selection codebook according to an embodiment;

FIG. 3 is a flow chart of a method for determining a type II port selection codebook according to an embodiment; and

FIG. 4 is a structural diagram of an apparatus for determining a type II port selection codebook according to an embodiment.

DETAILED DESCRIPTION

According to the background, for a UE operating according to Rel-17, if a feedback method for the weighting coefficient matrix W' in the type II port selection codebook as defined in Rel-16 is still used, codebook feedback overhead of a UE may be relatively high.

Specifically, a structure of the type II port selection codebook defined in the 3rd Generation Partnership Project (3GPP) Rel-16 is $W=W_1 \times W' \times W^H_{freq}$, where H represents transpose conjugation.

Wi is a port selection matrix with a dimension $X \times 2L$:

$$W_1 = \begin{bmatrix} E_{\frac{x}{2} \times L} & 0 \\ 0 & E_{\frac{x}{2} \times L} \end{bmatrix},$$

where $E_{\frac{x}{2} \times L}$ is a port selection sub-matrix in each polarization direction, which is used to select L ports with an interval d from a Channel State Information-Reference Signal (CSI-RS) resource including X ports, and each port corresponds to a spatial domain beam transmitted by the base station.

The frequency domain beam matrix $W_{freq}$ is $N \times K$ and consists of K frequency domain beam vectors with length N.

The linear weighting coefficient matrix W' (hereinafter referred to as the weighting coefficient matrix) is $2L \times K$, and each coefficient in the matrix corresponds to a port and a frequency domain beam vector.

In the above three matrices, CSI-RS resources of X ports, a number L of selected ports, the interval d, length N of the frequency domain beam vector, and a number K of selected frequency domain beams are all pre-configured parameters.

Regarding feedback format of the type II port selection codebook, Rel-16 defines that the type II port selection codebook includes three sets of feedback parameters, corresponding to the matrices $W_1$, W' and $W_{freq}$ respectively.

A feedback parameter of the port selection matrix Wi indicates each selected port. Specifically, the feedback parameter directly indicates a first selected port, and other selected ports can be obtained through derivation of the preconfigured parameters L and d.

A feedback parameter of the frequency domain beam matrix $W_{freq}$ indicates each frequency domain beam index. Specifically, firstly, selected frequency domain beams are cyclically shifted, to make an index of a strongest frequency domain beam fixed to zero, and then the feedback parameter directly indicates each frequency domain beam index except the strongest frequency domain beam.

A feedback parameter of the weighting coefficient matrix W' indicates a weighted amplitude and phase of a combination of each port and frequency domain beam. Specifically, the feedback parameter includes indication of a position of a strongest coefficient, indication of a position of a non-zero coefficient, and an amplitude and phase of each non-zero coefficient, where the position of the strongest coefficient is a position of a strongest coefficient in a first column of coefficients in the weighting coefficient matrix W'.

In a low-band Frequency Division Duplexing (FDD) mode, angle and delay between uplink and downlink channels have reciprocity. Through uplink channel estimation, the base station can not only acquire candidate spatial domain beams of the downlink channel, but also can acquire candidate frequency domain beams of the downlink channel. Therefore, the base station configures the UE to select and report from the candidate spatial domain beams and candidate frequency domain beams, thereby reducing complexity of precoding calculation of the UE. For a new low-complexity precoding measurement method stipulated in the latest standard, it is necessary to design a new reporting parameter format, i.e., a new type II port selection codebook.

According to current standardization progress, a structure of the new type II port selection codebook can also be expressed as $W=W1 \times W' \times W^H_{freq}$. Similar to definition of Rel-16, the port selection matrix Wi is determined by each selected port indicated by the feedback parameter, $W_{freq}$ is determined by a frequency domain beam index specified by the standard, pre-configured or indicated by the feedback parameter, and a feedback parameter of the weighting coefficient matrix W' indicates a weighted amplitude and phase of each port and each frequency domain beam, i.e., indication of the position of the strongest coefficient, the indication of the position of the non-zero coefficient, and the amplitude and phase of each non-zero coefficient. Referring to the background, when the UE adopting Rel-17 and subsequent standards selects a type II port selection codebook, a proportion of non-zero coefficients in the coefficients in the determined weighting coefficient matrix W' may be very large, which results in high overhead for the UE feeding back the codebook.

Embodiments of the present disclosure provide a method for feeding back a type II port selection codebook, including: acquiring a to-be-measured reference signal, and determining the type II port selection codebook based on a measurement result of the to-be-measured reference signal; generating feedback parameters based on the type II port selection codebook, wherein the feedback parameters include a strongest coefficient index, amplitudes of all coefficients, and phases of at least a portion of coefficients in a weighting coefficient matrix in the type II port selection codebook; and transmitting the feedback parameters.

In the embodiments of the present disclosure, amplitudes of all coefficients in the weighting coefficient matrix are fed back, so that the type II port selection codebook may be accurately indicated without additionally feeding back a position of each non-zero coefficient. Therefore, a new feedback parameter is designed for the type II port selection codebook, especially the feedback parameter for the weighting coefficient matrix W', so as to reduce codebook overhead.

In order to clarify the objects, characteristics and advantages of the disclosure, embodiments of present disclosure will be described in detail in conjunction with accompanying drawings.

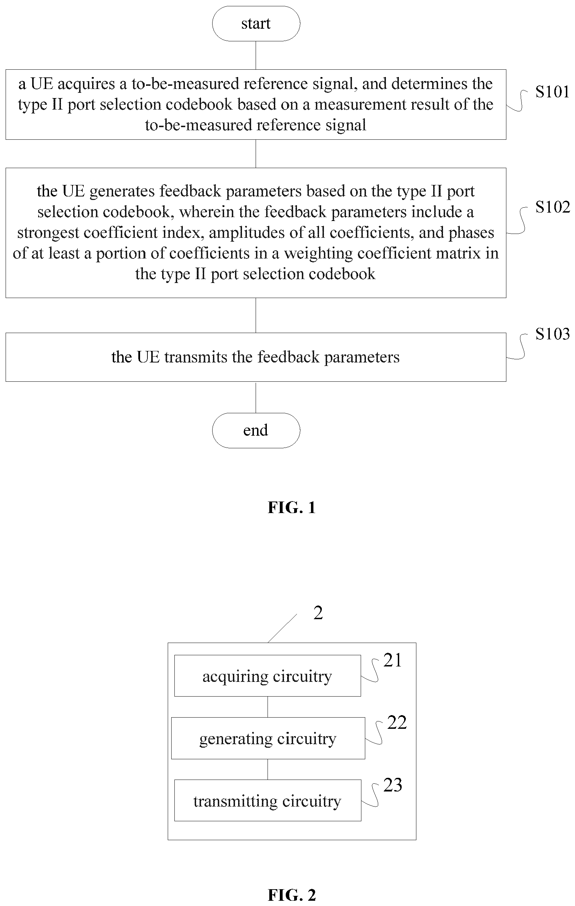

FIG. 1 is a flow chart of a method for feeding back a type II port selection codebook according to an embodiment.

The method may be applied to a UE side, for example, performed by a UE at the UE side.

The method may be applied to a scenario of codebook feedback, for example, a scenario of the UE adopting Rel-17 and subsequent standards feeding back a type II port selection codebook.

In some embodiments, the method including S101 to S103 may be performed by a chip with a feedback parameter generating function in the UE, or by a baseband chip in the UE.

Specifically, referring to FIG. 1, the method for feeding back the type II port selection codebook in the embodiment may include S101 to S103.

In S101, a UE acquires a to-be-measured reference signal, and determines the type II port selection codebook based on a measurement result of the to-be-measured reference signal.

In S102, the UE generates feedback parameters based on the type II port selection codebook, wherein the feedback parameters include a strongest coefficient index, amplitudes of all coefficients, and phases of at least a portion of coefficients in a weighting coefficient matrix in the type II port selection codebook.

In S103, the UE transmits the feedback parameters.

In some embodiments, in S101, the to-be-measured reference signal includes two or more signals which are used to measure channel information, interference power and interference channel matrix. Configuration parameters of the type II port selection codebook may be determined based on the measurement result.

Specifically, by measuring the to-be-measured reference signal, channel estimation and interference estimation may be performed to acquire a channel matrix and an interference matrix. Based on these two matrices, the UE may determine the Type II port selection codebook.

For example, the network may configure a CSI-RS resource for channel measurement, and a Channel State Information-Interference Measurement (CSI-IM) resource for interference measurement.

For another example, the network may configure a CSI-RS resource for channel measurement, a CSI-IM resource for interference measurement, and a CSI-RS resource for interference measurement.

After performing S101 to determine the type II port selection codebook, the UE may perform a subsequent step to feed back parameter information (i.e., feedback parameters) corresponding to a port selection matrix, a frequency domain beam matrix and a weighting coefficient matrix in the type II port selection codebook.

In some embodiments, for the port selection matrix, the feedback parameter indicates each selected port.

In some embodiments, for the frequency domain beam matrix, the feedback parameter indicates each selected frequency domain beam.

Specifically, according to codebook configuration, each selected frequency domain beam may be indicated in the feedback parameter merely when the network indicates that the frequency domain beam matrix needs to be fed back.

For example, assuming that the network or standard predefines a first frequency domain beam as the selected frequency domain beam, if the network indicates that there is no need to feed back the frequency domain beam matrix when preconfiguring the to-be-measured reference signal, the UE and the network select the first frequency domain beam by default. Therefore, codebook feedback overhead is further reduced.

In some embodiments, for the weighting coefficient matrix, the feedback parameter indicates an amplitude of each coefficient, phases of at least a portion of the coefficients, and a strongest coefficient index in the matrix.

Specifically, as the amplitudes of all coefficients in the weighting coefficient matrix are indicated by the feedback parameter, the network may deduce positions of non-zero coefficients in the matrix accordingly, without requiring UE to specifically indicate the position of each non-zero coefficient in the matrix in the feedback parameter.

In some embodiments, the phases of at least a portion of the coefficients refer to phases of non-zero coefficients in the weighting coefficient matrix.

Further, for any coefficient in the weighting coefficient matrix, whether the coefficient is a non-zero coefficient is determined based on a quantized value of an amplitude of the coefficient. For example, '000' represents that the coefficient is zero.

Alternatively, the phases of at least a portion of the coefficients refer to phases of all the coefficients in the weighting coefficient matrix. That is, the UE indicates amplitudes and phases of all the coefficients in the weighting coefficient matrix in the feedback parameters, so that the network can directly determine the positions of the non-zero coefficients, without requiring the UE to specifically indicate the position of each non-zero coefficient in the matrix in the feedback parameters.

In some embodiments, the strongest coefficient index may be selected from all the coefficients in the weighting coefficient matrix.

Alternatively, the strongest coefficient index may be selected from all non-zero coefficients in the weighting coefficient matrix.

A difference between the above two embodiments for determining the strongest coefficient index lies in that selection ranges of the strongest coefficient index are different.

Specifically, if the strongest coefficient index is determined among the non-zero coefficients in the weighting coefficient matrix, an indication range of the strongest coefficient index may be narrower, and a number of feedback bits may also be smaller. In addition, the number of feedback bits varies in different type II port selection codebooks, thus, an additional parameter is required to indicate the feedback overhead. For example, while transmitting the feedback parameters, the UE may also transmit indication information to indicate bit overhead of the feedback parameters. The bit overhead does not belong to the codebook parameter, and may be fed back together with the feedback parameters, for example, forming a special bit stream to be encoded and transmitted.

If the strongest coefficient index is determined among all the coefficients in the weighting coefficient matrix, the number of feedback bits for determining the strongest coefficient index is fixed, and no additional parameter is needed to indicate the feedback overhead.

In a first typical application scenario, for the weighting coefficient matrix, the feedback parameters transmitted by the UE may indicate the amplitudes and phases of all coefficients in the weighting coefficient matrix, and the strongest coefficient index determined from all the coefficients in the weighting coefficient matrix.

In a second typical application scenario, for the weighting coefficient matrix, the feedback parameters transmitted by the UE may indicate the amplitudes of all the coefficients in the weighting coefficient matrix, the phases of the non-zero coefficients in the weighting coefficient matrix, and the strongest coefficient index determined from the non-zero coefficients.

From above, with the embodiments of the present disclosure, the amplitudes of all the coefficients in the weighting coefficient matrix are fed back, so that the type II port selection codebook may be accurately indicated without additionally feeding back a position of each non-zero coefficient. Therefore, a new feedback parameter is designed for the type II port selection codebook, especially the feedback parameter for the weighting coefficient matrix W', so as to reduce codebook overhead.

FIG. 2 is a structural diagram of an apparatus for feeding back a type II port selection codebook according to an embodiment. Those skilled in the art could understand that the apparatus 2 for feeding back the type II port selection codebook in the embodiment may be configured to perform technical solutions of the above method provided in the embodiment as shown in FIG. 1.

In some embodiments, referring to FIG. 2, the apparatus 2 for feeding back the type II port selection codebook may include: an acquiring circuitry 21 configured to acquire a to-be-measured reference signal, and determine the type II port selection codebook based on a measurement result of the to-be-measured reference signal; a generating circuitry 22 configured to generate feedback parameters based on the type II port selection codebook, wherein the feedback parameters include a strongest coefficient index, amplitudes of all coefficients, and phases of at least a portion of coefficients in a weighting coefficient matrix in the type II port selection codebook; and a transmitting circuitry 23 configured to transmit the feedback parameters.

Details of working principles and working modes of the apparatus 2 for feeding back the type II port selection codebook may be referred to relevant description of FIG. 1, and are not repeated here.

In some embodiments, the apparatus 2 for feeding back the type II port selection codebook may correspond to a chip with a feedback parameter generating function in a UE, or to a chip with a data processing function, such as a System-On-Chip (SOC) or a baseband chip, or to a chip module including a chip with a feedback parameter generating function in the UE, or to a chip module including a chip with a data processing function, or to the UE.

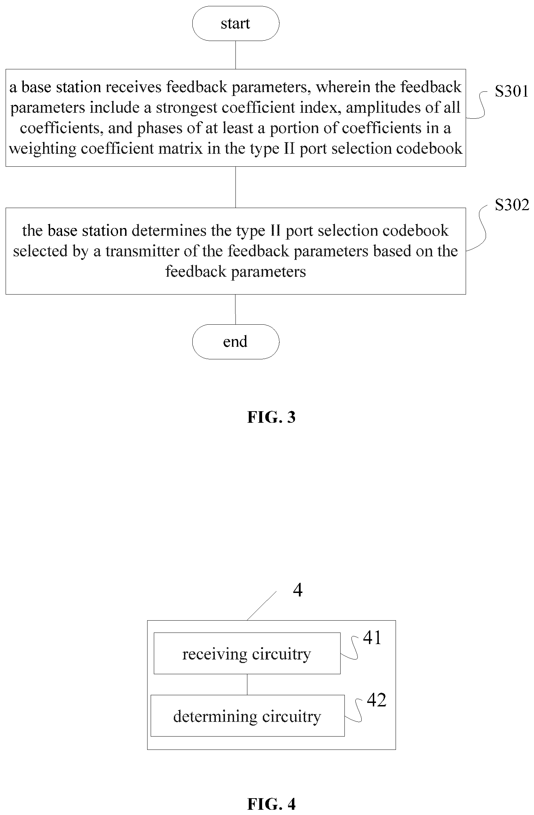

FIG. 3 is a flow chart of a method for determining a type II port selection codebook according to an embodiment.

The method may be performed by a network side, such as by a network device on the network side, e.g., a base station (gNB).

In some embodiments, the method provided in following S301 and S302 may be performed by a chip with a codebook calculating function in a network device, or may be performed by a baseband chip in the network device.

Specifically, referring to FIG. 3, the method for determining the type II port selection codebook in the embodiment may include S301 and S302.

In S301, a base station receives feedback parameters, wherein the feedback parameters include a strongest coefficient index, amplitudes of all coefficients, and phases of at least a portion of coefficients in a weighting coefficient matrix in the type II port selection codebook.

In S302, the base station determines the type II port selection codebook selected by a transmitter of the feedback parameters based on the feedback parameters.

Those skilled in the art could understand that S301 and S302 may be regarded as steps corresponding to S101 to S103 of the above method as shown in FIG. 1, and the two are complementary in specific implementation principles and logic. Therefore, explanation of terms in the present embodiment may be referred to relevant description of the embodiment as shown in FIG. 1, and is not repeated here.

In some embodiments, the UE performs the method as shown in FIG. 1 to determine the type II port selection codebook based on the measurement result of the to-be-measured reference signal, and then feeds back the feedback parameters used to indicate the matrices included in the type II port selection codebook. The base station performs the method as shown in FIG. 3 to acquire the port selection matrix, the frequency domain beam matrix and the weighting coefficient matrix based on the received feedback parameters. Multiplication of the three matrices is the type II port selection codebook determined by UE.

In some embodiments, before S301, the base station further configures a to-be-measured reference signal, and indicates to feed back the type II port selection codebook.

Specifically, the to-be-measured reference signal includes two or more signals. For example, the base station may configure a CSI-RS resource for channel measurement, and a CSI-IM resource for interference measurement. For another example, the base station may configure a CSI-RS resource for channel measurement, a CSI-IM resource for interference measurement, and a CSI-RS resource for interference measurement.

In some embodiments, the phases of at least a portion of the coefficients refer to phases of non-zero coefficients in the weighting coefficient matrix.

Accordingly, in S302, for any coefficient in the weighting coefficient matrix, it may be determined whether the coefficient is a non-zero coefficient based on a quantized value of an amplitude of the coefficient, so as to restore the weighting coefficient matrix.

Alternatively, the phases of at least some of the coefficients may refer to phases of all the coefficients in the weighting coefficient matrix.

In some embodiments, the strongest coefficient index may be selected from all the coefficients in the weighting coefficient matrix.

Alternatively, the strongest coefficient index may be selected from all the non-zero coefficients in the weighting coefficient matrix. Accordingly, in S301, in addition to receiving the feedback parameters, the base station may also receive indication information, and determine bit overhead of the feedback parameters based on the indication information.

In some embodiments, the feedback parameters further include each selected port in a port selection matrix in the type II port selection codebook.

In some embodiments, the feedback parameters further include each selected frequency domain beam in a frequency domain beam matrix in the type II port selection codebook.

Further, in S302, the base station determines the port selection matrix based on each selected port indicated by the feedback parameters, determines the frequency domain beam matrix based on each selected frequency domain beam (or each predefined frequency domain beam) indicated by the feedback parameters, and determines the weighting coefficient matrix based on the strongest coefficient index, the amplitudes of all coefficients, and the phases of at least a portion of coefficients indicated by the feedback parameter, so as to acquire the type II port selection codebook.

From above, with the embodiments of the present disclosure, the base station deduces positions of the non-zero coefficients in the weighting coefficient matrix based on the amplitudes of all the coefficients in received feedback information, without specifically receiving indication of a position of each non-zero coefficient.

FIG. 4 is a structural diagram of an apparatus for determining a type II port selection codebook according to an embodiment. Those skilled in the art could understand that the apparatus 4 for determining the type II port selection codebook in the embodiment may be configured to perform technical solutions of the method as shown in FIG. 3.

Referring to FIG. 4, the apparatus 4 for determining the type II port selection codebook in the embodiment may include: a receiving circuitry 41 configured to receive feedback parameters, wherein the feedback parameters include a strongest coefficient index, amplitudes of all coefficients, and phases of at least a portion of coefficients in a weighting coefficient matrix in the type II port selection codebook; and a determining circuitry 42 configured to determine the type II port selection codebook selected by a transmitter of the feedback parameters based on the feedback parameters.

Details of working principles and working modes of the apparatus 4 for determining the type II port selection codebook may be referred to relevant description of FIG. 3, and are not repeated here.

In some embodiments, the apparatus 4 for determining the type II port selection codebook may correspond to a chip with a codebook calculating function in a network device, or to a chip with a data processing function, such as an SOC or a baseband chip, or to a chip module including a chip with a codebook calculating function in the network device, or to a chip module including a chip with a data processing function, or to the network device.

In some embodiments, each module/unit of each apparatus and product described in the above embodiments may be a software module/unit or a hardware module/unit, or may be a software module/unit in part, and a hardware module/unit in part.

For example, for each apparatus or product applied to or integrated in a chip, each module/unit included therein may be implemented by hardware such as circuits; or, at least some modules/units may be implemented by a software program running on a processor integrated inside the chip, and the remaining (if any) part of the modules/units may be implemented by hardware such as circuits. For each apparatus or product applied to or integrated in a chip module, each module/unit included therein may be implemented by hardware such as circuits. Different modules/units may be disposed in a same component (such as a chip or a circuit module) or in different components of the chip module. Or at least some modules/units may be implemented by a software program running on a processor integrated inside the chip module, and the remaining (if any) part of the modules/units may be implemented by hardware such as circuits. For each apparatus or product applied to or integrated in a terminal, each module/unit included therein may be implemented by hardware such as circuits. Different modules/units may be disposed in a same component (such as a chip or a circuit module) or in different components of the terminal. Or at least some modules/units may be implemented by a software program running on a processor integrated inside the terminal, and the remaining (if any) part of the modules/units may be implemented by hardware such as circuits.

In an embodiment of the present disclosure, a non-volatile or non-transitory computer-readable storage medium having computer instructions stored therein is provided, wherein when the computer instructions are executed by a processor, the method provided in the embodiment as shown in FIG. 1 is performed. Alternatively, when the computer instructions are executed by the processor, the method provided in the embodiment as shown in FIG. 3 is performed. The storage medium may be a computer-readable storage medium, such as a non-volatile memory or a non-transitory memory. The storage medium may include a ROM, a RAM, a magnetic disk or an optical disk.

In an embodiment of the present disclosure, an apparatus for feeding back a type II port selection codebook including a memory and a processor is provided, wherein the memory has computer instructions stored therein, and when the processor executes the computer instructions, the method provided in the embodiment as shown in FIG. 1 is performed.

In an embodiment of the present disclosure, an apparatus for determining a type II port selection codebook including a memory and a processor is provided, wherein the memory has computer instructions stored therein, and when the processor executes the computer instructions, the method provided in the embodiment as shown in FIG. 3 is performed.

Those skilled in the art could understand that all or part of steps in the various methods in the above embodiments can be completed by instructing relevant hardware through a program, and the program can be stored in any computer-readable storage medium which includes a ROM, a RAM, a magnetic disk or an optical disk.

The technical solutions of the present disclosure may be applied to 5G communication systems, 4G and 3G communication systems, and various new communication systems in the future, such as 6G and 7G communication systems.

The technical solutions of the present disclosure also may be applied to different network architectures, including but not limited to a relay network architecture, a dual-link architecture, and a vehicle-to-everything architecture.

5G CN described in the embodiments of the present disclosure may also be referred to as new core, 5G NewCore, or Next Generation Core (NGC) and the like. 5G CN is set up independently of existing core networks, such as Evolved Packet Core (EPC).

The Base Station (BS) in the embodiments of the present disclosure may also be referred to as a base station equipment, and is an apparatus deployed in a Radio Access Network (RAN) to provide wireless communication functions. For example, an equipment that provides a base station function in a 2G network includes a Base Transceiver Station (BTS) and a Base Station Controller (BSC). An equipment that provides the base station function in a 3G network includes a Node B and a Radio Network Controller (RNC). An equipment that provides the base station function in a 4G network includes an evolved Node B (eNB). In a Wireless Local Area Network (WLAN), an equipment that provides the base station function is an Access Point (AP). An equipment that provides the base station function in 5G New Radio (NR) includes a gNB. The base station also refers to an equipment that provides the base station function in a new communication system in the future.

A terminal in the embodiments of the present disclosure may refer to various forms of UE, access terminal, user unit, user station, Mobile Station (MS), remote station, remote terminal, mobile equipment, user terminal, terminal equipment, wireless communication equipment, user agent or user device. The terminal equipment may further be a cellular phone, a cordless phone, a Session Initiation Protocol (SIP) phone, a Wireless Local Loop (WLL) station, a Personal Digital Assistant (PDA), a handheld device with a wireless communication function, a computing device or other processing devices connected to a wireless modems, an in-vehicle device, a wearable device, a terminal equipment in the future 5G network, or a terminal equipment in a future evolved Public Land Mobile Network (PLMN), which is not limited in the embodiments of the present disclosure.

In the embodiments of the present disclosure, a unidirectional communication link from an access network to a terminal is defined as a downlink, data transmitted on the downlink is downlink data, and a transmission direction of the downlink data is called a downlink direction. Besides, a unidirectional communication link from a terminal to an access network is defined as an uplink, data transmitted on the uplink is uplink data, and a transmission direction of the uplink data is called an uplink direction.

It could be understood that the term "and/or" in the present disclosure is merely an association relationship describing associated objects, indicating that there can be three types of relationships, for example, A and/or B can represent "A exists only, both A and B exist, B exists only. In addition, the character "/" in the present disclosure represents that the former and latter associated objects have an "or" relationship.

The "plurality" in the embodiments of the present disclosure refers to two or more.

The descriptions of the first, second, etc. in the embodiments of the present disclosure are merely for illustrating and differentiating the objects, and do not represent the order or the particular limitation of the number of devices in the embodiments of the present disclosure, which do not constitute any limitation to the embodiments of the present disclosure.

The "connection" in the embodiments of the present disclosure refers to various connection ways such as direct connection or indirect connection to realize communication between devices, which is not limited in the embodiments of the present disclosure. "Network" and "system" in the embodiments of the present disclosure refer to a same concept, where a communication system is a communication network.

It should also be understood that, in the embodiments of the present disclosure, the processor may be a Central Processing Unit (CPU), or other general processors, Digital Signal Processors (DSPs), Application Specific Integrated Circuits (ASICs), Field Programmable Gate Arrays (FPGAs) or other Programmable logic devices, discrete gates or transistor logic devices, discrete hardware components, and the like. A general processor may be a microprocessor or the processor may be any conventional processor or the like.

It should also be understood that the memory in the embodiments of the present disclosure may be either volatile memory or nonvolatile memory, or may include both volatile and nonvolatile memories. The nonvolatile memory may be a Read-Only Memory (ROM), a Programmable ROM (PROM), an Erasable PROM (EPROM), an electrically Erasable EPROM (EEPROM), or a flash memory. The volatile memory may be a Random Access Memory (RAM) which functions as an external cache. By way of example but not limitation, various forms of RAM are available, such as Static Random Access Memory (SRAM), Dynamic Random Access Memory (DRAM), Synchronous Dynamic Random Access Memory (SDRAM), Double Data Rate Synchronous Dynamic Random Access Memory (DDR SDRAM), Enhanced SDRAM (ESDRAM), Synchronous connection to DRAM (SLDRAM), and Direct Rambus RAM (DR-RAM).

The above embodiments may be implemented in whole or in part by software, hardware, firmware or any combination thereof. When implemented in software, the above embodiments may be implemented in whole or in part in the form of a computer program product. The computer program product includes one or more computer instructions or computer programs. The procedures or functions according to the embodiments of the present disclosure are wholly or partially generated when the computer instructions or the computer programs are loaded or executed on a computer. The computer may be a general purpose computer, a special purpose computer, a computer network, or other programmable device. The computer instructions may be stored in a computer readable storage medium or transmitted from one computer readable storage medium to another computer readable storage medium, for example, the computer instructions may be transmitted from one website, computer, server or data center to another website, computer, server or data center by wire (e.g., infrared, wireless, microwave and etc.). The computer readable storage medium may be any available medium that can be accessed by a computer or a data storage device such as a server or a data center that contains one or more sets of available media. The available medium may be a magnetic medium (e.g., floppy disk, hard disk or magnetic tape), an optical medium (e.g., DVD), or a semiconductor medium. The semiconductor medium may be a solid disk.

It should be understood that, in the various embodiments of the present disclosure, sequence numbers of the above-mentioned processes do not represent an execution sequence, and the execution sequence of each process should be determined by its function and inherent logic, which does not limit an implementation process of the embodiments of the present disclosure.

In the above embodiments of the present disclosure, it should be understood that the disclosed method, device and system may be implemented in other ways. For example, the above device embodiments are merely illustrative, and for example, division of units is merely one logical division, and other divisions may be realized in practice, for example, a plurality of units or components may be combined or integrated into another system, or some features may be omitted, or not executed. Further, the shown or discussed mutual coupling or direct coupling or communication connection may be an indirect coupling or communication connection via some interfaces, devices or units, and may be in an electrical, mechanical or other form.

The units described as separate parts may or may not be physically separate, and parts shown as units may or may not be physical units, that is, may be disposed in one place, or may be distributed on a plurality of network units. Some or all of the units can be selected according to practical requirements to achieve the purpose of the solutions of the embodiments. In addition, functional units in the embodiments of the present disclosure may be integrated in one processing unit, or each unit may be physically separate, or two or more units may be integrated in one unit. The integrated units can be realized in a form of hardware, or in a form of hardware plus a software functional unit.

The integrated units implemented in the form of the software functional unit may be stored in a computer readable storage medium. The software functional unit is stored in a storage medium and includes several instructions for causing a computer device (a personal computer, a server or a network device) to execute some steps of the methods in the embodiments of the present disclosure. And the storage medium may be a medium for storing program codes, such as a U disk, a removable hard disk, a ROM, a RAM, a magnetic disk or an optical disk.

Although the present disclosure has been disclosed above with reference to preferred embodiments thereof, it should be understood that the disclosure is presented by way of example only, and not limitation. Those skilled in the art can modify and vary the embodiments without departing from the spirit and scope of the present disclosure.

**Claims**

1.  A method for feeding back a type II port selection codebook, **characterized by** comprising:

    acquiring a to-be-measured reference signal, and determining the type II port selection codebook based on a measurement result of the to-be-measured reference signal; generating feedback parameters based on the type II port selection codebook, wherein the feedback parameters comprise a strongest coefficient index, amplitudes of all coefficients, and phases of at least a portion of coefficients in a weighting coefficient matrix in the type II port selection codebook; and transmitting the feedback parameters.

2.  The method according to claim 1, **characterized in that** the phases of at least a portion of the coefficients refer to phases of non-zero coefficients in the weighting coefficient matrix, or phases of all the coefficients in the weighting coefficient matrix.

3.  The method according to claim 2, **characterized in that** based on that the phases of at least a portion of the coefficients refer to phases of non-zero coefficients in the weighting coefficient matrix, for any coefficient in the weighting coefficient matrix, whether the coefficient is a non-zero coefficient is determined based on a quantized value of an amplitude of the coefficient.

4.  The method according to claim 1, **characterized in that** the strongest coefficient index is selected from all the coefficients in the weighting coefficient matrix, or from all the non-zero coefficients in the weighting coefficient matrix.

5.  The method according to any one of claims 1 to 4, **characterized in that** the feedback parameters further comprise each selected port in a port selection matrix in the type II port selection codebook.

6.  The method according to any one of claims 1 to 4, **characterized in that** the feedback parameters further comprise each selected frequency domain beam in a frequency domain beam matrix in the type II port selection codebook.

7.  An apparatus for feeding back a type II port selection codebook, **characterized by** comprising:

    an acquiring circuitry configured to acquire a to-be-measured reference signal, and determine the type II port selection codebook based on a measurement result of the to-be-measured reference signal; a generating circuitry configured to generate feedback parameters based on the type II port selection codebook, wherein the feedback parameters comprise a strongest coefficient index, amplitudes of all coefficients, and phases of at least a portion of coefficients in a weighting coefficient matrix in the type II port selection codebook; and a transmitting circuitry configured to transmit the feedback parameters.

8.  A method for determining a Type II port selection codebook, **characterized by** comprising:

    receiving feedback parameters, wherein the feedback parameters comprise a strongest coefficient index, amplitudes of all coefficients, and phases of at least a portion of coefficients in a weighting coefficient matrix in the type II port selection codebook; and determining the type II port selection codebook selected by a transmitter of the feedback parameters based on the feedback parameters.

9.  The method according to claim 8, **characterized in that** prior to said receiving the feedback parameters, the method further comprises: configuring a to-be-measured reference signal, and indicating to feed back the type II port selection codebook.

10. The method according to claim 8, **characterized in that** the phases of at least a portion of the coefficients refer to phases of non-zero coefficients in the weighting coefficient matrix, or phases of all the coefficients in the weighting coefficient matrix.

11. The method according to claim 10, **characterized in that** based on that the phases of at least a portion of the coefficients refer to phases of non-zero coefficients in the weighting coefficient matrix, said determining the type II port selection codebook selected by the transmitter of the feedback parameters based on the feedback parameters comprises:
for any coefficient in the weighting coefficient matrix, determining whether the coefficient is a non-zero coefficient based on a quantized value of an amplitude of the coefficient.

12. The method according to claim 8, **characterized in that** the strongest coefficient index is selected from all the coefficients in the weighting coefficient matrix, or from all the non-zero coefficients in the weighting coefficient matrix.

13. The method according to any one of claims 8 to 12, **characterized in that** the feedback parameters further comprise each selected port in a port selection matrix in the type II port selection codebook.

14. The method according to any one of claims 8 to 12, **characterized in that** the feedback parameters further comprise each selected frequency domain beam in a frequency domain beam matrix in the type II port selection codebook.

15. An apparatus for determining a Type II port selection codebook, **characterized by** comprising:

    a receiving circuitry configured to receive feedback parameters, wherein the feedback parameters comprise a strongest coefficient index, amplitudes of all coefficients, and phases of at least a portion of coefficients in a weighting coefficient matrix in the type II port selection codebook; and
    a determining circuitry configured to determine the type II port selection codebook selected by a transmitter of the feedback parameters based on the feedback parameters.

16. A non-volatile or non-transitory computer-readable storage medium having computer instructions stored therein, **characterized in that** when the computer instructions are executed by a processor, the method of any one of claims 1 to 6 or the method of any one of claims 8 to 14 is performed.

17. An apparatus for feeding back a type II port selection codebook, comprising a memory and a processor, **characterized in that** the memory has computer instructions stored therein, and when the processor executes the computer instructions, the method of any one of claims 1 to 6 is performed.

18. An apparatus for determining a Type II port selection codebook, comprising a memory and a processor, **characterized in that** the memory has computer instructions stored therein, and when the processor executes the computer instructions, the method of any one of claims 8 to 14 is performed.

start

a UE acquires a to-be-measured reference signal, and determines the type II port selection codebook based on a measurement result of the to-be-measured reference signal — S101

the UE generates feedback parameters based on the type II port selection codebook, wherein the feedback parameters include a strongest coefficient index, amplitudes of all coefficients, and phases of at least a portion of coefficients in a weighting coefficient matrix in the type II port selection codebook — S102

the UE transmits the feedback parameters — S103

end

**FIG. 1**

2

acquiring circuitry — 21

generating circuitry — 22

transmitting circuitry — 23

**FIG. 2**

start

a base station receives feedback parameters, wherein the feedback parameters include a strongest coefficient index, amplitudes of all coefficients, and phases of at least a portion of coefficients in a weighting coefficient matrix in the type II port selection codebook ⟩ S301

the base station determines the type II port selection codebook selected by a transmitter of the feedback parameters based on the feedback parameters ⟩ S302

end

**FIG. 3**

4

| receiving circuitry | ⟩ 41 |

| determining circuitry | ⟩ 42 |

**FIG. 4**

## INTERNATIONAL SEARCH REPORT

| International application No. |
|---|
| **PCT/CN2022/079451** |

### A. CLASSIFICATION OF SUBJECT MATTER

H04B 7/0456(2017.01)i

According to International Patent Classification (IPC) or to both national classification and IPC

### B. FIELDS SEARCHED

Minimum documentation searched (classification system followed by classification symbols)

H04W; H04B

Documentation searched other than minimum documentation to the extent that such documents are included in the fields searched

Electronic data base consulted during the international search (name of data base and, where practicable, search terms used)

CNTXT; CNABS; CNKI; VEN; WOTXT; EPTXT; USTXT; 3GPP: 类型, 码本, 加权, 幅度, type II, codebook, coefficient, amplitude, rel-17, weighting

### C. DOCUMENTS CONSIDERED TO BE RELEVANT

| Category* | Citation of document, with indication, where appropriate, of the relevant passages | Relevant to claim No. |
|---|---|---|
| PX | WO 2021102954 A1 (ZTE CORP.) 03 June 2021 (2021-06-03) description, page 1, paragraph 3 - page 33, paragraph 2 | 1-18 |
| X | CN 110557176 A (ZTE CORP.) 10 December 2019 (2019-12-10) description, paragraphs [0005]-[0281] | 1-18 |
| X | WO 2020092340 A1 (INTEL CORP.) 07 May 2020 (2020-05-07) description, paragraphs [0009]-[0094] | 1-18 |
| X | HUAWEI et al. "R1-2007592 "Discussion on CSI Enhancements for Rel-17"" *3GPP TSG RAN WG1 Meeting#103-e*, 24 October 2020 (2020-10-24), sections 1-3 | 1-18 |
| A | CN 111314034 A (NOKIA TECHNOLOGIES OY) 19 June 2020 (2020-06-19) entire document | 1-18 |
| A | US 2019260434 A1 (LG ELECTRONICS INC.) 22 August 2019 (2019-08-22) entire document | 1-18 |

☐ Further documents are listed in the continuation of Box C.      ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **15 April 2022** | **06 May 2022** |

| Name and mailing address of the ISA/CN | Authorized officer |
|---|---|
| **China National Intellectual Property Administration (ISA/ CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2022/079451**

| Patent document cited in search report | | | Publication date (day/month/year) | Patent family member(s) | | | Publication date (day/month/year) |
|---|---|---|---|---|---|---|---|
| WO | 2021102954 | A1 | 03 June 2021 | None | | | |
| CN | 110557176 | A | 10 December 2019 | EP | 3806343 | A1 | 14 April 2021 |
| | | | | US | 2021167833 | A1 | 03 June 2021 |
| | | | | WO | 2019228354 | A1 | 05 December 2019 |
| WO | 2020092340 | A1 | 07 May 2020 | CN | 112913155 | A | 04 June 2021 |
| | | | | EP | 3874614 | A1 | 08 September 2021 |
| CN | 111314034 | A | 19 June 2020 | US | 2020186224 | A1 | 11 June 2020 |
| | | | | EP | 3667940 | A1 | 17 June 2020 |
| | | | | HK | 40020083 | A0 | 23 October 2020 |
| US | 2019260434 | A1 | 22 August 2019 | US | 2020091975 | A1 | 19 March 2020 |
| | | | | WO | 2017196098 | A1 | 16 November 2017 |
| | | | | US | 10491276 | B2 | 26 November 2019 |
| | | | | US | 10790888 | B2 | 29 September 2020 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202110298337